(19)

Europäisches
Patentamt
European
Patent Office
Office européen
des brevets

(11) **EP 4 388 869 A1**

(12) **EUROPEAN PATENT APPLICATION**
published in accordance with Art. 153(4) EPC

(43) Date of publication:
**26.06.2024  Bulletin 2024/26**

(21) Application number: **21954255.2**

(22) Date of filing: **20.08.2021**

(51) International Patent Classification (IPC):
***A01K 1/03*** *(2006.01)*

(52) Cooperative Patent Classification (CPC):
**A01K 1/03**

(86) International application number:
**PCT/JP2021/030561**

(87) International publication number:
**WO 2023/021687 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **JTEKT Corporation**
  **Kariya-shi, Aichi-ken, 448-8652 (JP)**
• **Tokushima University**
  **Tokushima-shi, Tokushima 770-8501 (JP)**

(72) Inventors:
• **TAKESHIMA Masayuki**
  **Kariya-shi, Aichi 448-8652 (JP)**

• **SHIBATA Yoshiyuki**
  **Kariya-shi, Aichi 448-8652 (JP)**
• **SOKU Toshimasa**
  **Kariya-shi, Aichi 448-8652 (JP)**
• **NUMAZAKI Kazuya**
  **Kariya-shi, Aichi 448-8652 (JP)**
• **MORIMATSU Fumiki**
  **Tokushima-shi, Tokushima 770-8501 (JP)**
• **TAKAGAKI Kentaroh**
  **Tokushima-shi, Tokushima 770-8501 (JP)**
• **HIRATA Maki**
  **Tokushima-shi, Tokushima 770-8501 (JP)**

(74) Representative: **TBK**
  **Bavariaring 4-6**
  **80336 München (DE)**

(54) **LABORATORY ANIMAL MANAGEMENT SYSTEM AND MANAGEMENT METHOD**

(57)     A management system for an experimental animal is provided. This management system includes an information identifying unit configured to identify experimental information on the experimental animal to be transported to an experiment site, and a stress value calculating unit configured to calculate a stress value indicating stress to be suffered by the experimental animal during transportation based on the experimental information. The experimental information includes at least a part of a transportation distance for the transportation of the experimental animal, a transportation period for the transportation of the experimental animal, the number of the experimental animals to be transported at a time, an age of the experimental animal, and information on pretreatment given to the experimental animal prior to the transportation.

Fig.2

EP 4 388 869 A1

**Description**

TECHNICAL FIELD

The present disclosure relates to a management system and a management method for an experimental animal.

BACKGROUND ART

Patent Document 1 discloses an experimental animal breeding device that can be moved by an automobile. This device includes an experimental animal breeding room, an experimental animal surgery room, etc., and can be moved to a desired location for use.

Related Art Documents

Patent Documents

Patent Document 1: Japanese Unexamined Patent Application Publication No. 3-195429 (JP 3-195429 A)

SUMMARY OF THE INVENTION

Problem to be Solved by the Invention

For example, when animals are loaded into a mobile breeding device as described above and transported to a research institution etc., the animals may have poor physical conditions due to stress caused by the transportation. Even if experiments such as treatment or medication are performed on the animals, the credibility of experimental results may decrease. Therefore, there is a demand for a technology that can predict the stress of experimental animals during transportation.

Means for Solving the Problem

The present disclosure can be implemented in the following aspects.

(1) According to a first aspect of the present disclosure, a management system for an experimental animal is provided. This management system includes an information identifying unit configured to identify experimental information on the experimental animal to be transported to an experiment site, and a stress value calculating unit configured to calculate a stress value indicating stress to be suffered by the experimental animal during transportation based on the experimental information. The experimental information includes at least a part of a transportation distance for the transportation of the experimental animal, a transportation period for the transportation of the experimental animal, the number of the experimental animals to be transported at a time, an age of the experimental animal, and information on pretreatment given to the experimental animal prior to the transportation. With the management system of this aspect, the stress to be suffered by the experimental animal during the transportation can be predicted based on the experimental information.

(2) In the management system of this aspect, the experimental information may include details of an experiment to be conducted on the experimental animal, and the management system may include a recovery period estimating unit configured to estimate a recovery period required for the experimental animal to recover from the stress based on the calculated stress value and the details of the experiment. With the management system of this aspect, the recovery period required for the experimental animal to recover can be estimated based on the details of the experiment.

(3) In the management system of this aspect, the recovery period estimating unit may be configured to determine, as the recovery period, a period required until the calculated stress value decreases to an experiment-enabled stress value determined based on the details of the experiment. With the management system of this aspect, the recovery period required until the experiment can be conducted can be determined based on the details of the experiment.

(4) In the management system of this aspect, the recovery period estimating unit may be configured to determine a period required until the calculated stress value decreases to the experiment-enabled stress value by using an attenuation function indicating a relationship between an elapse of time and a decrease in the stress value. With the management system of this aspect, the recovery period can be determined easily.

(5) In the management system of this aspect, the attenuation function may differ depending on at least one of a body size of the experimental animal and the age of the experimental animal. With the management system of this aspect, the recovery period of the experimental animal can be determined based on the body size and the age of the experimental animal.

(6) In the management system of this aspect, the stress value calculating unit may be configured to correct the stress value based on a cortisol concentration of the experimental animal before the experiment. With the management system of this aspect, the stress values can be calculated accurately.

(7) In the management system of this aspect, the experimental information may include an experiment start date, and the management system may include a transportation timing determining unit configured to determine a transportation start timing of the experimental animal based on the experiment start date, the recovery period, and the transportation period of the experimental animal. According to this aspect, the transportation start timing of the experimental animal can be determined appropriately.

The present disclosure can be implemented as a management method for an experimental animal and a management device for an experimental animal in addition to the aspect as the management system for the experimental animal described above.

BRIEF DESCRIPTION OF THE DRAWINGS

[FIG. 1] FIG. 1 is an explanatory diagram of a management system.
[FIG. 2] FIG. 2 is a block diagram showing a schematic configuration of the management system.
[FIG. 3] FIG. 3 is a flowchart of a transportation management process.
[FIG. 4] FIG. 4 is a diagram showing a table for determining a coefficient kn.
[FIG. 5] FIG. 5 is a diagram showing a graph for determining a value Pd.
[FIG. 6] FIG. 6 is a diagram showing a graph for determining a value Pt.
[FIG. 7] FIG. 7 is a diagram showing a table for determining values Pg, Pm, Po.
[FIG. 8] FIG. 8 is a diagram showing a table for determining values Ps, Pr, Py.
[FIG. 9] FIG. 9 is an explanatory diagram showing a method for estimating a recovery period.
[FIG. 10] FIG. 10 is an explanatory diagram showing a method for determining a transportation start timing.
[FIG. 11] FIG. 11 is a flowchart of a correction coefficient determination process.
[FIG. 12] FIG. 12 is a graph showing a correspondence between a cortisol concentration and a stress value.
[FIG. 13] FIG. 13 is an explanatory diagram of a method for deriving a correction coefficient.
[FIG. 14] FIG. 14 is an explanatory diagram showing an effect of a change in the correction coefficient.

MODES FOR CARRYING OUT THE INVENTION

A. First Embodiment:

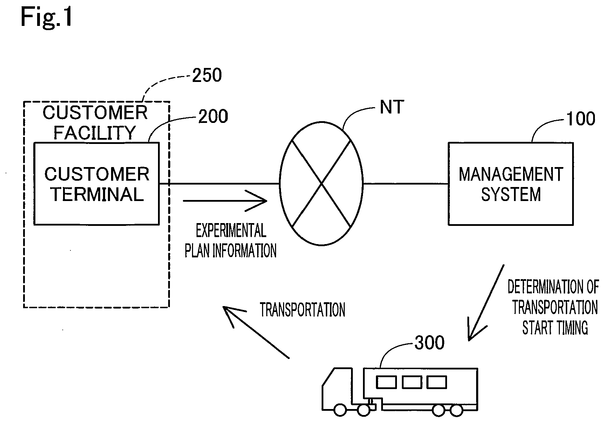

FIG. 1 is an explanatory diagram of a management system 100 for experimental animals as a first embodiment of the present disclosure. The management system 100 receives experimental plan information on an animal experiment from a customer terminal 200 via a communication line NT such as the Internet, and determines a transportation start timing to transport experimental animals to a customer facility 250 that is an experiment site based on the information. For example, a computer, a smartphone, or a tablet terminal is used as the customer terminal 200. For transportation, various types of vehicle 300 are used as typified by a mobile animal experiment vehicle including experiment equipment, and an animal transportation vehicle without experiment equipment. In the present embodiment, the experimental animal is a pig. Various animal species such as a cow, a horse, a sheep, a dog, a cat, a rabbit, a mouse, and a chicken can be used as the experimental animal.

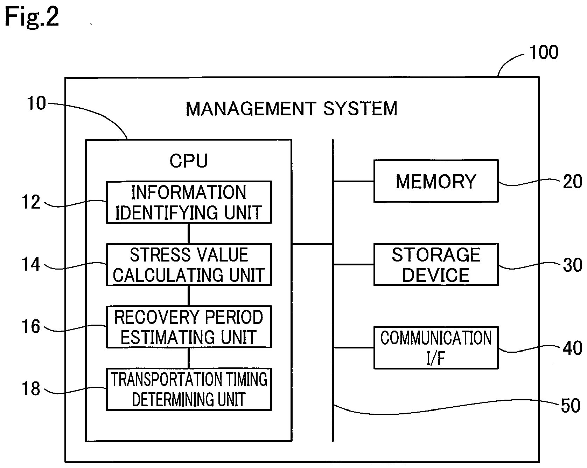

FIG. 2 is a block diagram showing a schematic configuration of the management system 100. The management system 100 is configured by a computer and includes a CPU 10, a memory 20, a storage device 30, and a communication interface 40. These are connected to each other by a predetermined bus 50 so that they can communicate with each other. The communication interface 40 functions as an input unit for inputting various types of information and an output unit for outputting various types of information.

The CPU 10 functions as an information identifying unit 12, a stress value calculating unit 14, a recovery period estimating unit 16, and a transportation timing determining unit 18 by loading a predetermined computer program stored in the storage device 30 into the memory 20 and executing it. These functional units may be implemented by a circuit.

The information identifying unit 12 identifies experimental information on experimental animals to be transported to an experiment site based on experimental plan information transmitted from the customer terminal 200. The stress value calculating unit 14 calculates a stress value indicating stress to be suffered by the experimental animals during transportation based on the experimental information. The recovery period estimating unit 16 estimates a recovery period required for the experimental animals to recover from the stress caused by the transportation based on the stress value and details of the experiment. The transportation timing determining unit 18 determines a transportation start timing of the experimental animals based on an experiment start date, the recovery period, and a transportation period. Details of a process implemented by these units will be described below with reference to a flowchart.

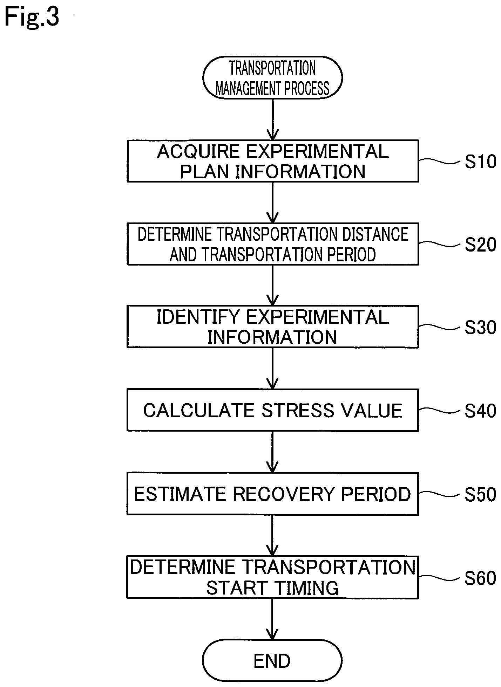

FIG. 3 is a flowchart of a transportation management process to be executed in the management system 100. This process is started when the management system 100 receives a request for transportation of experimental animals from the customer terminal 200 via the communication line NT.

When execution of the transportation management process is started, the information identifying unit 12 of the management system 100 acquires experimental plan information from the customer terminal 200 in step S10. In the present embodiment, the experimental plan information includes, for example, the following information.

(i) Information indicating a location of a transportation destination
(ii) Number of experimental animals to be transported at a time
(iii) Ages of the experimental animals to be transported (including ages in months and weeks)
(iv) Body sizes (total lengths, weights, waist sizes, etc.) of the experimental animals to be transported
(v) Information on pretreatment given to the experimental animals prior to the transportation
(vi) Information indicating details of an experiment on the experimental animals
(vii) Experiment start date
(viii) Type of the animals to be transported
(ix) Equipment and devices to be transported together

The "location of a transportation destination" is, for example, the location of the customer facility 250 where the animal experiment is to be conducted, and is represented by an address or latitude and longitude. The "number of experimental animals to be transported at a time" is the number of experimental animals to be transported at a time by the same vehicle 300. The "ages" of experimental animals to be transported include "ages in months" and "ages in weeks". The "body sizes of experimental animals" are represented, for example, by at least one of total lengths, weights, and waist sizes. The "information on pretreatment" includes, for example, information indicating the presence or absence of genome editing, the name of a drug administered in advance, and whether an electroencephalogram measuring device is implanted. The "type of animals to be transported" may be omitted if the type of experimental animals handled by the management system 100 is limited. As described above, the management system 100 of the present embodiment targets pigs. The "equipment and devices to be transported together" are equipment and devices to be transported by the vehicle 300 together with experimental animals.

In step S20, the CPU 10 identifies a transportation route for the experimental animals based on the information indicating the location of the transportation destination in the experimental plan information acquired in step S10 and the location of a transportation source of the experimental animals, and determines a transportation distance and a transportation period based on the transportation route. The transportation route, the transportation distance, and the transportation period can be determined by using a known route search algorithm using map data. The CPU 10 may cause an external server to identify the transportation route and determine the transportation distance and transportation period.

In step S30, the information identifying unit 12 identifies experimental information on the experimental animals. In the present embodiment, the information identifying unit 12 identifies, as the experimental information, the information included in the experimental plan information acquired in step S10, and the transportation distance and the transportation period determined in step S20.

In step S40, the stress value calculating unit 14 calculates a stress value indicating stress to be suffered by the experimental animals during transportation based on the experimental information identified in step S30. In the present embodiment, the stress value calculating unit 14 calculates a stress value $Si$ based on Equation (1) shown below. The stress value $Si$ indicates that the stress increases as the value increases.

$$Si = kc \times kn \times (Pd + Pt + Pg + Pm + Po + Ps + Pr + Py) \ldots (1)$$

In the equation, the symbol $kc$ is an arbitrarily determined correction coefficient, and is generally "1.0".
The symbol $kn$ is a coefficient determined based on the number of experimental animals to be transported at a time.
The symbol $Pd$ is a value determined based on the transportation distance.

The symbol Pt is a value determined based on the transportation period.

The symbol Pg is a value determined based on the presence or absence of genome editing.

The symbol Pm is a value determined based on the type of a drug administered in advance.

The symbol Po is a value determined based on whether an electroencephalogram measuring device is implanted.

The symbol Ps is a value determined based on the presence or absence of soundproofing equipment in the vehicle 300.

The symbol Pr is a value determined based on whether the experimental animals are exposed to music during transportation.

The symbol Py is a value determined based on whether various types of equipment are to be transported together with the experimental animals.

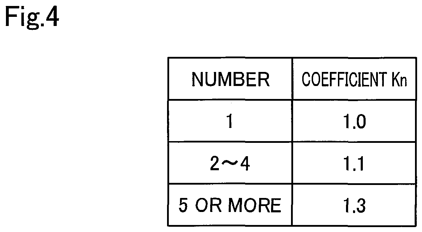

FIG. 4 is a diagram showing a table for determining the coefficient kn. The stress value calculating unit 14 refers to the table shown in FIG. 4 stored in the storage device 30 and determines the coefficient kn based on the number of experimental animals to be transported at a time. As shown in FIG. 4, the coefficient kn increases as the number of objects to be transported at a time increases.

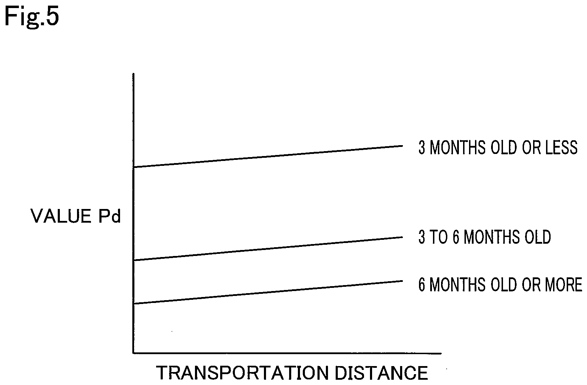

FIG. 5 is a diagram showing a graph for determining the value Pd. The value Pd is determined based on the transportation distance of the experimental animals and the ages of the experimental animals. The value Pd increases as the transportation distance increases and increases as the age decreases. The relationship among the transportation distance, the age, and the value Pd shown in FIG. 5 is stored in the storage device 30 as a function or map. The stress value calculating unit 14 calculates the value Pd based on the transportation distance and the ages of the experimental animals by referring to the function or map stored in the storage device 30.

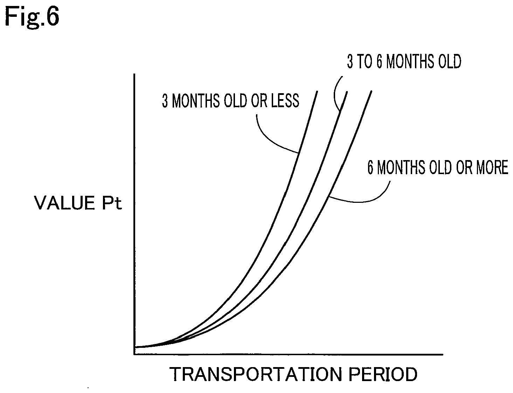

FIG. 6 is a diagram showing a graph for determining the value Pt. The value Pt is determined based on the transportation period of the experimental animals and the ages of the experimental animals. The value Pt increases as the transportation period increases and increases as the age decreases. The relationship among the transportation period, the age, and the value Pt shown in FIG. 6 is stored in the storage device 30 as a function or map. The stress value calculating unit 14 calculates the value Pt based on the transportation period and the ages of the experimental animals by referring to the function or map stored in the storage device 30.

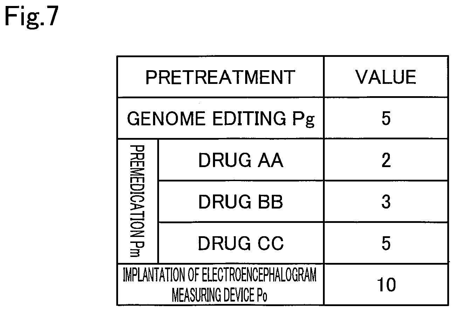

FIG. 7 is a diagram showing a table for determining the values Pg, Pm, Po. The stress value calculating unit 14 refers to the table shown in FIG. 7 stored in the storage device 30 and determines the values Pg, Pm, Po. For example, when the experimental animals have been subjected to genome editing as pretreatment before transportation, the value Pg is determined to be a predetermined value ("5" in FIG. 7). When medication is performed as pretreatment, the value Pm is determined based on the type of an administered drug (2, 3, or 5 in FIG. 7). When an electroencephalogram measuring device is implanted as pretreatment, the value Po is determined to be a predetermined value ("10" in FIG. 7). The values Pg, Pm, Po are set to increase as the pretreatment is more burdensome on the experimental animals.

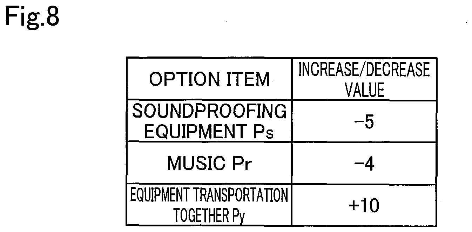

FIG. 8 is a diagram showing a table for determining the values Ps, Pr, Py. The stress value calculating unit 14 refers to the table shown in FIG. 8 stored in the storage device 30 and determines the values Ps, Pr, Py. For example, when the transportation vehicle 300 includes soundproofing equipment, the value Ps is determined to be a predetermined value ("-5" in FIG. 8). When the experimental animals are exposed to music during transportation, the value Pr is set to a predetermined value ("-4" in FIG. 8). When various types of equipment and device are to be transported together with the experimental animals during transportation, the value Py is set to a predetermined value ("+10" in FIG. 8). The values Pg, Pm, Po are values related to comfort during transportation, and are set to increase as the transportation environment is more uncomfortable, and to decrease as the transportation environment is more comfortable. The value Pr may be a different value depending on the music to which the experimental animals are exposed. Further, the value Py may be a different value between a case where the equipment is loaded on the vehicle 300 in advance and a case where the equipment is loaded after the experimental animals are loaded. For example, the value Py may be larger in the case where the equipment is loaded after the experimental animals are loaded than in the case where the equipment is loaded on the vehicle 300 in advance.

After the stress value calculating unit 14 calculates the stress value Si in step S40 of FIG. 3, the recovery period estimating unit 16 estimates, in step S50, a recovery period that is a period required for the experimental animals to recover from the stress.

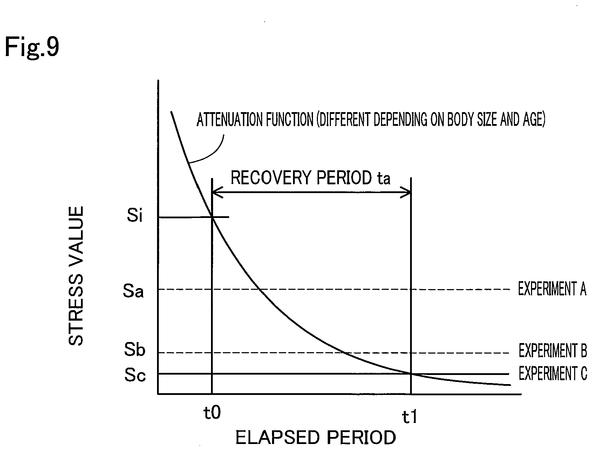

FIG. 9 is an explanatory diagram showing a method for estimating the recovery period by the recovery period estimating unit 16. The storage device 30 stores an attenuation function indicating a correspondence between the stress value and an elapsed period. This attenuation function is a function in which the stress value decreases as time elapses. The attenuation function is determined based on at least one of the body sizes (total lengths, weights, and waist sizes) and the ages of the experimental animals. The recovery period estimating unit 16 first refers to the attenuation function stored in the storage device 30 and determines time t0 associated with the stress value Si calculated in step S40. Next, the recovery period estimating unit 16 identifies an experiment-enabled stress value associated with details of the experiment to be conducted on the experimental animals. Experiment-enabled stress values for individual details of experiments are stored in the storage device 30. In FIG. 9, experiment-enabled stress values associated with Experiment A, Experiment B, and Experiment C are shown as a value Sa, a value Sb, and a value Sc, respectively. For example, when Experiment C is to be conducted on the experimental animals, the experiment-enabled stress value is the value Sc. Therefore, the recovery period estimating unit 16 determines time t1 associated with this value Sc with reference to the attenuation function. Then, a recovery period ta required until the stress value decreases from the value Si to the value Sc is calculated based on a difference between time t1 and time t0. When the recovery period ta elapses, the experimental animals will be in a stress state in which the corresponding experiment can be conducted.

After the recovery period estimating unit 16 estimates the recovery period ta in step S50 of FIG. 3, the transportation timing determining unit 18 determines, in step S60, a transportation start timing to start transportation of the experimental animals.

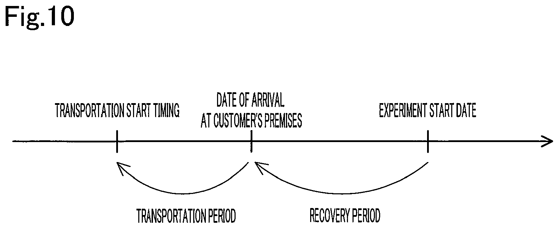

FIG. 10 is an explanatory diagram showing a method for determining the transportation start timing by the transportation timing determining unit 18. As shown in FIG. 10, the transportation timing determining unit 18 determines, as the transportation start timing, a date that goes back from the experiment start date in the experimental information identified in step S30 by the recovery period estimated in step S50 and the transportation period in the experimental information determined in step S30.

When the transportation start timing of the experimental animals is determined through the series of processes described above, the management system 100 notifies the customer terminal 200 about the timing via the communication line NT, notifies a transportation facility that will transport the experimental animals about the transportation start timing, and arrange delivery of the experimental animals. The customer terminal 200 may also be notified via the communication line NT about the stress value calculated in step S40 of FIG. 3 and the recovery period estimated in step S50.

In the management system 100 of the first embodiment described above, the experimental information is determined based on the experimental plan information received from the customer terminal 200, and the stress to be suffered by the experimental animals during transportation is predicted based on the experimental information. Since the experimental information includes the transportation distance for the transportation of the experimental animals, the transportation period for the transportation of the experimental animals, the number of experimental animals to be transported at a time, the ages of the experimental animals, the information on pretreatment given to the experimental animals prior to the transportation, etc., the stress to be suffered by the experimental animals during the transportation can accurately be predicted based on these pieces of information.

In the present embodiment, the recovery period required for the experimental animals to recover from the stress can be estimated based on the predicted stress and the details of the experiment. Therefore, it is possible to easily identify the date when the experiment can be started. As a result, it is possible to suppress treatment, medication, etc. on the experimental animals under the stress, thereby improving the credibility of experimental results. When organs of the experimental animals are to be used for regenerative medicine, the organs can be harvested with small damage.

In the present embodiment, the period required for the calculated stress value to decrease to the experiment-enabled stress value determined based on the details of the experiment is determined as the recovery period. Therefore, an appropriate recovery period can be determined based on the details of the experiment. Particularly in the present embodiment, the recovery period is determined by using the attenuation function indicating the relationship between the elapse of time and the decrease in the stress value. Therefore, the recovery period can be determined easily. In the present embodiment, the attenuation function differs depending on the body sizes and the ages of the experimental animals. Therefore, an appropriate recovery period can be determined based on the body sizes and the ages of the experimental animals.

In the present embodiment, the transportation start timing can appropriately be determined based on the experiment start date, the recovery period, and the transportation period. Therefore, the operating rates of a facility that produces the experimental animals and the transportation facility can be improved.

B. Second Embodiment:

The configuration of a management system 100 of a second embodiment is the same as the configuration of the management system 100 of the first embodiment. In the second embodiment, the stress value calculating unit 14 shown in FIG. 2 has a function of correcting the stress value. In order for the stress value calculating unit 14 to correct the stress value, the management system 100 executes a correction coefficient determination process described below.

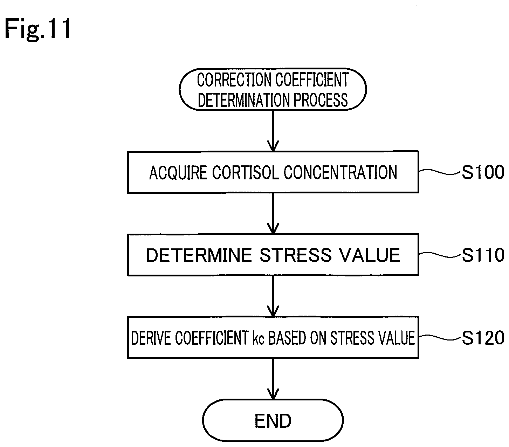

FIG. 11 is a flowchart of the correction coefficient determination process to be executed in the management system 100. This process is a process to be executed prior to the execution of the transportation management process shown in FIG. 3.

In step S100, the stress value calculating unit 14 first acquires a cortisol concentration of an experimental animal before an experiment, that is, an experimental animal in a stress state in which the experiment can be conducted after transportation. Cortisol is a hormone secreted by an adrenal cortex, and its secretion increases when stressed. The cortisol concentration can be measured by collecting saliva or blood from the experimental animal.

In step S110, the stress value calculating unit 14 calculates a stress value associated with the cortisol concentration acquired in step S100.

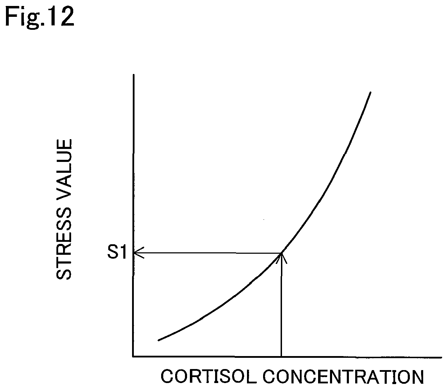

FIG. 12 is a graph showing a correspondence between the cortisol concentration and the stress value. This correspondence is prestored in the storage device 30 as a function or map. The stress value calculating unit 14 calculates a stress value S1 associated with the cortisol concentration by referring to the function or map stored in the storage device 30. The correspondence between the cortisol concentration and the stress value may differ depending on the body size and the age of the experimental animal.

In step S120 of FIG. 11, the stress value calculating unit 14 derives the correction coefficient kc in Equation (1) shown in the first embodiment based on the stress value S1 determined in step S 110.

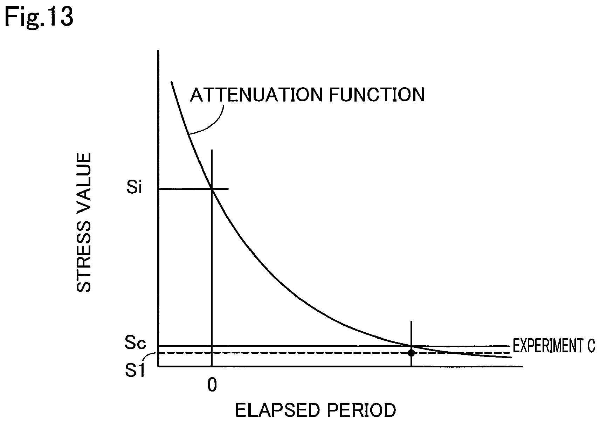

FIG. 13 is an explanatory diagram of a method for deriving the correction coefficient kc. For example, it is assumed that the stress value of an experimental animal whose stress has decreased enough to start Experiment C reaches the value Sc before the start of the experiment. Therefore, the stress value S1 determined in step S 110 is expected to agree with the stress value Sc before Experiment C is conducted. When the stress value S1 determined in step S110 is not the stress value Sc as shown in FIG. 13, the stress value calculating unit 14 compares the stress value Sc and the stress value S1. When the stress value S1 is smaller than the stress value Sc, the stress value calculating unit 14 reduces the correction coefficient kc. When the stress value S1 is conversely larger than the stress value Sc, the stress value calculating unit 14 increases the correction coefficient kc. In the transportation management process shown in FIG. 3 to be executed next time, the correction coefficient kc is used to calculate the stress value in step S40 and estimate the recovery period in step S50.

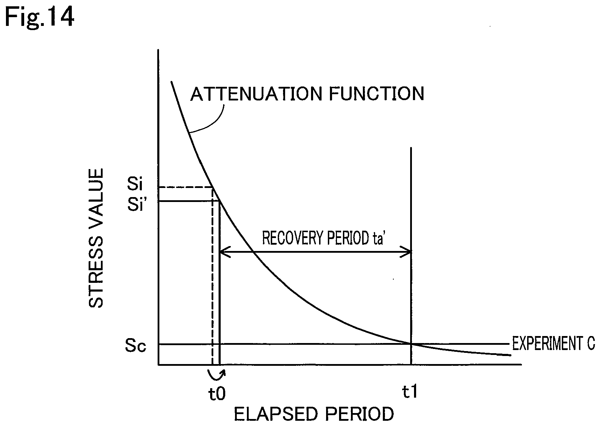

FIG. 14 is an explanatory diagram showing an effect of the change in the correction coefficient kc. When the stress value Sc and the stress value S1 are compared and the stress value S1 is smaller than the stress value Sc as shown in FIG. 13, the stress value calculating unit 14 reduces the correction coefficient kc. Then, the stress value Si calculated by Equation (1) above is calculated as a stress value Si' smaller than the original stress value Si by being multiplied by a correction coefficient kc (e.g., 0.9) that is smaller than the previous correction coefficient kc (e.g., 1.0). As shown in FIG. 14, time t0 to be used for calculating the recovery period is delayed, and a recovery period ta' required until the stress value decreases to the value Sc decreases.

According to the second embodiment described above, the stress value can accurately be corrected by measuring the actual cortisol concentration of the experimental animal. As a result, the recovery period can be determined accurately, and therefore the transportation start timing can be determined accurately as well. Thus, the operating rates of the production facility and the transportation facility for the experimental animals can be improved.

C. Other Embodiments:

(C-1) In the above embodiments, the experimental information includes the transportation distance for the transportation of the experimental animals, the transportation period for the transportation of the experimental animals, the number of experimental animals to be transported at a time, the ages of the experimental animals, and the information on pretreatment given to the experimental animals prior to the transportation. However, all of them need not be included and some of them may be included.

(C-2) In the above embodiments, the management system 100 includes the recovery period estimating unit 16 and the transportation timing determining unit 18, but need not include the transportation timing determining unit 18. In this case, the management system 100 may be operated as a system that estimates the recovery period and notifies the customer terminal 200 about the estimated recovery period via the communication interface 40, or a system that displays the recovery period on a display device. Further, the management system 100 need not include the transportation timing determining unit 18 and the recovery period estimating unit 16. In this case, the management system 100 may be operated as a system that predicts the stress to be suffered by the experimental animals during transportation by calculating the stress value and notifies the customer terminal 200 about the predicted stress via the communication interface 40, or a system that displays the predicted stress on a display device.

(C-3) In the above embodiments, the attenuation function shown in FIG. 9 differs depending on the body sizes and the ages of the experimental animals, but one attenuation function may be determined regardless of the body sizes and the ages. Further, different attenuation functions may be determined depending not only on the body sizes and the ages but also on animal species.

(C-4) In the above embodiments, Equation (1) for calculating the stress value Si can be changed as appropriate. For example, the value kn may be a term rather than a coefficient. Further, at least one of the values Pd, Pt, Pg, Pm, Po, Ps, Pr, Py may be a coefficient instead of a term. Further, each coefficient and each term in Equation (1) above are not essential, and some coefficients or terms may be omitted as appropriate.

The present disclosure is not limited to the embodiments described above, and can be implemented in various configurations without departing from the spirit thereof. For example, the technical features in the embodiments corresponding to the technical features in the aspects described in SUMMARY OF THE INVENTION can be replaced or combined as appropriate to solve some or all of the problems described above or to achieve some or all of the effects described above. Unless the technical features are described as being essential herein, they can be omitted as appropriate.

Description of the Reference Numerals

10 ... CPU, 12 ... information identifying unit, 14 ... stress value calculating unit, 16 ... recovery period estimating unit, 18 ... transportation timing determining unit, 20 ... memory, 30 ... storage device, 40 ... communication interface, 50 ... bus, 100 ... management system, 200 ... customer terminal, 250 ... customer facility, 300 ... vehicle

**Claims**

1. A management system for an experimental animal, the management system comprising:

   an information identifying unit configured to identify experimental information on the experimental animal to be transported to an experiment site; and
   a stress value calculating unit configured to calculate a stress value indicating stress to be suffered by the experimental animal during transportation based on the experimental information, wherein
   the experimental information includes at least a part of a transportation distance for the transportation of the experimental animal, a transportation period for the transportation of the experimental animal, the number of the experimental animals to be transported at a time, an age of the experimental animal, and information on pretreatment given to the experimental animal prior to the transportation.

2. The management system according to claim 1, wherein:

   the experimental information includes details of an experiment to be conducted on the experimental animal; and
   the management system includes a recovery period estimating unit configured to estimate a recovery period required for the experimental animal to recover from the stress based on the calculated stress value and the details of the experiment.

3. The management system according to claim 2, wherein the recovery period estimating unit is configured to determine, as the recovery period, a period required until the calculated stress value decreases to an experiment-enabled stress value determined based on the details of the experiment.

4. The management system according to claim 3, wherein the recovery period estimating unit is configured to determine a period required until the calculated stress value decreases to the experiment-enabled stress value by using an attenuation function indicating a relationship between an elapse of time and a decrease in the stress value.

5. The management system according to claim 4, wherein the attenuation function differs depending on at least one of a body size of the experimental animal and the age of the experimental animal.

6. The management system according to any one of claims 2 to 5, wherein the stress value calculating unit is configured to correct the stress value based on a cortisol concentration of the experimental animal before the experiment.

7. The management system according to any one of claims 2 to 6, wherein:

   the experimental information includes an experiment start date; and
   the management system includes a transportation timing determining unit configured to determine a transportation start timing of the experimental animal based on the experiment start date, the recovery period, and the transportation period of the experimental animal.

8. A management method for an experimental animal, the management method comprising:

   a step of identifying experimental information on the experimental animal to be transported to an experiment site; and

a step of calculating a stress value indicating stress to be suffered by the experimental animal during transportation based on the experimental information, wherein

the experimental information includes at least a part of a transportation distance for the transportation of the experimental animal, a transportation period for the transportation of the experimental animal, the number of the experimental animals to be transported at a time, an age of the experimental animal, and information on pretreatment given to the experimental animal prior to the transportation.

# Fig.1

250

CUSTOMER
FACILITY

200

CUSTOMER
TERMINAL

EXPERIMENTAL
PLAN INFORMATION

NT

MANAGEMENT
SYSTEM

100

DETERMINATION OF
TRANSPORTATION
START TIMING

TRANSPORTATION

300

Fig.2

100

MANAGEMENT SYSTEM

10

CPU

12
INFORMATION
IDENTIFYING UNIT

14
STRESS VALUE
CALCULATING UNIT

16
RECOVERY PERIOD
ESTIMATING UNIT

18
TRANSPORTATION TIMING
DETERMINING UNIT

MEMORY 20

STORAGE
DEVICE 30

COMMUNICATION
I/F 40

50

Fig.3

```
         ( TRANSPORTATION        )
         ( MANAGEMENT PROCESS    )
                   |
                   v
   +---------------------------------+
   |     ACQUIRE EXPERIMENTAL        |----- S10
   |       PLAN INFORMATION          |
   +---------------------------------+
                   |
                   v
   +---------------------------------+
   | DETERMINE TRANSPORTATION DISTANCE|----- S20
   |  AND TRANSPORTATION PERIOD      |
   +---------------------------------+
                   |
                   v
   +---------------------------------+
   |     IDENTIFY EXPERIMENTAL       |----- S30
   |         INFORMATION             |
   +---------------------------------+
                   |
                   v
   +---------------------------------+
   |     CALCULATE STRESS VALUE      |----- S40
   +---------------------------------+
                   |
                   v
   +---------------------------------+
   |    ESTIMATE RECOVERY PERIOD     |----- S50
   +---------------------------------+
                   |
                   v
   +---------------------------------+
   |  DETERMINE TRANSPORTATION       |----- S60
   |        START TIMING             |
   +---------------------------------+
                   |
                   v
             (     END     )
```

Fig.4

| NUMBER | COEFFICIENT Kn |
|--------|----------------|
| 1 | 1.0 |
| 2～4 | 1.1 |
| 5 OR MORE | 1.3 |

Fig.5

VALUE Pd

3 MONTHS OLD OR LESS

3 TO 6 MONTHS OLD

6 MONTHS OLD OR MORE

TRANSPORTATION DISTANCE

Fig.6

VALUE Pt

3 TO 6 MONTHS OLD

3 MONTHS OLD OR LESS

6 MONTHS OLD OR MORE

TRANSPORTATION PERIOD

Fig.7

| PRETREATMENT | | VALUE |
|---|---|---|
| GENOME EDITING Pg | | 5 |
| PREMEDICATION Pm | DRUG AA | 2 |
| | DRUG BB | 3 |
| | DRUG CC | 5 |
| IMPLANTATION OF ELECTROENCEPHALOGRAM MEASURING DEVICE Po | | 10 |

Fig.8

| OPTION ITEM | INCREASE/DECREASE VALUE |
|---|---|
| SOUNDPROOFING EQUIPMENT Ps | −5 |
| MUSIC Pr | −4 |
| EQUIPMENT TRANSPORTATION TOGETHER Py | +10 |

Fig.9

Fig.10

TRANSPORTATION START TIMING          DATE OF ARRIVAL          EXPERIMENT START DATE
                                   AT CUSTOMER'S PREMISES

TRANSPORTATION PERIOD              RECOVERY PERIOD

Fig.11

```
   ┌─────────────────────────┐
   │  CORRECTION COEFFICIENT │
   │  DETERMINATION PROCESS  │
   └─────────────────────────┘
                │
                ▼
   ┌─────────────────────────────────┐
   │  ACQUIRE CORTISOL CONCENTRATION │──── S100
   └─────────────────────────────────┘
                │
                ▼
   ┌─────────────────────────────────┐
   │     DETERMINE STRESS VALUE      │──── S110
   └─────────────────────────────────┘
                │
                ▼
   ┌──────────────────────────────────────┐
   │ DERIVE COEFFICIENT kc BASED ON STRESS VALUE │──── S120
   └──────────────────────────────────────┘
                │
                ▼
           ┌─────────┐
           │   END   │
           └─────────┘
```

Fig.12

STRESS VALUE

S1

CORTISOL CONCENTRATION

Fig.13

Fig.14

STRESS VALUE

ATTENUATION FUNCTION

Si
Si'

RECOVERY PERIOD ta'

Sc

EXPERIMENT C

t0                    t1

ELAPSED PERIOD

<div style="text-align:center">

**INTERNATIONAL SEARCH REPORT**

</div>

| International application No. |
|---|
| PCT/JP2021/030561 |

| A.    CLASSIFICATION OF SUBJECT MATTER |
|---|
| Int.Cl.  A01K1/03(2006.01)i |
| FI: A01K1/03 |
| According to International Patent Classification (IPC) or to both national classification and IPC |

| B.    FIELDS SEARCHED |
|---|
| Minimum documentation searched (classification system followed by classification symbols) |
| Int.Cl.  A01K1/03 |

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

| C.    DOCUMENTS CONSIDERED TO BE RELEVANT |
|---|

| Category* | Citation of document, with indication, where appropriate, of the relevant passages | Relevant to claim No. |
|---|---|---|
| Y | 植竹勝治 外4名, 輸送牛の家畜福祉, 畜産の研究, vol. 62, no. 1, January 2008, pp. 70-86, https://agriknowledge.affrc.go.jp/RN/2030752040.pdf, p. 83, (UETAKE, Katsuji and 4 others, Sustainable Livestock Production and Human Welfare), non-official translation (Livestock welfare of transport cattle) | 1-8 |
| Y | 佐怒賀琴美 外2名, トラック輸送の経験がヤギの輸送に対する反応に及ぼす影響, 日本家畜管理学会誌・応用動物行動学会誌, vol. 52, no. 3, 2016, pp. 123-133, https://www.jstage.jst.go.jp/article/abm/52/3/52_123/_pdf/-char/ja, abstract, (SANUKA, Kotomi and 2 others, Effects of the experience of road transportation on the behavioral responses to it in goats, Animal Behaviour and Management) | 1-8 |

| ☒ Further documents are listed in the continuation of Box C. | ☒ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 09 September 2021 | 21 September 2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/030561 |

C (Continuation).　DOCUMENTS CONSIDERED TO BE RELEVANT

| Category* | Citation of document, with indication, where appropriate, of the relevant passages | Relevant to claim No. |
| --- | --- | --- |
| Y | 吉岡豪 外3名, 夏季高温時のトラック輸送が豚ストレス感受性遺伝子ヘテロ接合体保有豚と正常豚の直腸温度, 呼吸数, 血清中成分に及ぼす影響, 日本養豚学会誌, vol. 38, no. 1, March 2001, pp. 4-11, https://agriknowledge.affrc.go.jp/RN/2010622323.pdf, abstract, (YOSHIOKA, Go and 3 others, The effects of transportation of the porcine stress syndrome (PSS) heterozygous – and the PSS homozygous – negative pigs in a hot environmental loading truck on their rectal temperature, respiratory rates, and blood serum composition, The Japanese Journal of Swine Science) | 1-8 |
| Y | 植竹勝治 外5名, ヒト社会に貢献する動物に対するGABAのストレス軽減効果の検証, 麻布大学雑誌, vol. 17, 18, 2008, pp. 191-193, http://id.nii.ac.jp/1112/00003898/, abstract, (UETAKE, Katsuji and 5 others, Action research on the effect of orally administrated GABA for reducing stress in applied animals, Journal of Azabu University) | 1-8 |
| Y | JP 2014-172836 A (MEIJI SHIRYO KK) 22 September 2014 (2014-09-22), fig. 1 | 1-8 |
| Y | JP 9-262061 A (TANABE SEIYAKU CO., LTD.) 07 October 1997 (1997-10-07), abstract | 1-8 |
| A | 及川正明 外1名, 競走馬の輸送に伴う生体反応, 産業動物臨床医学雑誌, vol. 2, no. 4, December 2011, pp. 205-210, ttps://agriknowledge.affrc.go.jp/RN/2010830300.pdf, fig. 1, (OIKAWA, Masaaki and 1 other, Physiological responses induced by transport in thoroughbred racehorses, Japanese Journal of Large Animal Clinics) | 1-8 |
| A | 松浦晶 外5名, ストレス応答からみたウマの馬運車乗り降り学習の効果, 日本家畜管理学会・応用動物行動学会合同2009年度春季研究発表会, vol. 45, no. 1, 2009, p. 59, https://www.jstage.jst.go.jp/article/abm/45/1/45_KJ00005421594/_pdf/-char/ja, p. 1, drawings, (MATSUURA, Akihiro and 5 others), non-official translation (Effect of learning to get on and off the horse trailer from the viewpoint of stress response, Japan Society of Livestock Management and Japan Society for Applied Animal Behavior Joint 2009 Spring Research Presentation) | 1-8 |

Form PCT/ISA/210 (second sheet) (January 2015)

INTERNATIONAL SEARCH REPORT

Information on patent family members

International application No.

PCT/JP2021/030561

| JP 2014-172836 A | 22 September 2014 | (Family: none) |
| JP 9-262061 A | 07 October 1997 | US 5968810 A<br>abstract<br>EP 797929 A1<br>abstract |

Form PCT/ISA/210 (patent family annex) (January 2015)

**EP 4 388 869 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3195429 A